(19)

Europäisches
Patentamt
European
Patent Office
Office européen
des brevets

(11) **EP 4 723 223 A1**

(12) **EUROPEAN PATENT APPLICATION**
published in accordance with Art. 153(4) EPC

(43) Date of publication:
**08.04.2026 Bulletin 2026/15**

(21) Application number: **25767441.6**

(22) Date of filing: **06.03.2025**

(51) International Patent Classification (IPC):
***H01M 4/505*** (2010.01)

(52) Cooperative Patent Classification (CPC):
Y02E 60/10

(86) International application number:
**PCT/CN2025/081034**

(87) International publication number:
**WO 2025/185701 (11.09.2025 Gazette 2025/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.03.2024 CN 202410257081**

(71) Applicant: **Ningbo Ronbay New Energy
Technology Co., Ltd.
Yuyao Ningbo, Zhejiang 315402 (CN)**

(72) Inventors:
• **PENG, Jun**
  **Ningbo, Zhejiang 315402 (CN)**
• **LIU, Jikang**
  **Ningbo, Zhejiang 315402 (CN)**
• **LI, Linyan**
  **Ningbo, Zhejiang 315402 (CN)**
• **FENG, Daoyan**
  **Ningbo, Zhejiang 315402 (CN)**

(74) Representative: **J A Kemp LLP
80 Turnmill Street
London EC1M 5QU (GB)**

(54) **POSITIVE ELECTRODE MATERIAL AND PREPARATION METHOD THEREFOR, POSITIVE ELECTRODE SHEET, AND ALL-SOLID-STATE BATTERY**

(57)    The present application provides a positive electrode material, a preparation method thereof, a positive electrode sheet and an all-solid-state battery. The positive electrode material includes a lithium-rich manganese-based positive electrode active material and a coating layer covering at least part of a surface of the lithium-rich manganese-based positive electrode active material, where a molecular formula of the lithium-rich manganese-based positive electrode active material is $xLi_2$-$_\alpha MnO_3 \cdot (1-x)Li_{1-\beta}Ni_aCo_bMn_cO_{2-\gamma}$, where $a + b + c = 1$, $0 < \alpha + \beta \leq 0.2$, $0 < \gamma \leq 0.1$, and $0 < x < 1$; the coating layer meets the following Formula 1 and Formula 2: $0.5 \times 10^{-3}$ S/cm $\leq T \leq 5 \times 10^{-3}$ S/cm Formula 1, $H \leq 10^{-9}$ S/cm Formula 2, where T is an ionic conductivity of the coating layer, and H is an electronic conductivity of the coating layer. The positive electrode material provided in the present application solves the problem of low initial coulombic efficiency of the lithium-rich manganese-based positive electrode material, and simultaneously improves the migration efficiency of interface ions and the stability of the positive electrode material.

FIG. 2

EP 4 723 223 A1

**Description**

The present application claims priority to China patent application No. 202410257081.7, filed with the China National Intellectual Property Administration on March 6, 2024, and entitled "POSITIVE ELECTRODE MATERIAL AND PREPARATION METHOD THEREOF, POSITIVE ELECTRODE SHEET AND ALL-SOLID-STATE BATTERY", the entire content of which is hereby incorporated by reference.

**TECHNICAL FIELD**

The present application relates to the field of battery materials, in particular to a positive electrode material and a preparation method thereof, a positive electrode sheet and an all-solid-state battery.

**BACKGROUND**

Among solid electrolytes, sulfide system solid electrolytes have attracted wide attention because of their high conductivity, high lithium ion mobility, excellent mechanical performance and thermal stability. Lithium-rich manganese-based positive electrode materials are potential positive electrode materials for high-energy-density lithium-ion batteries, and are beneficial to the assembly of high-energy-density all-solid-state batteries. However, the initial coulombic efficiency of lithium-rich manganese-based positive electrode materials is low, which hinders the commercialization of the lithium-rich manganese-based positive electrode materials. In addition, when lithium-rich manganese-based positive electrode materials contact with mainstream sulfide system solid electrolytes, space charge layers may be generated, and at the same time, side reactions may occur to form inert interface layers, which hinders the migration of interface ions. Therefore, while solving the problem of low initial coulombic efficiency of the lithium-rich manganese-based positive electrode materials, reducing the interface reaction between lithium-rich manganese-based positive electrode materials and the sulfide solid electrolytes is helpful to promote their industrialization in the field of all-solid-state batteries.

**SUMMARY**

The present application provides a positive electrode material, which solves the problem of low initial coulombic efficiency of lithium-rich manganese-based positive electrode materials, at the same time, reduces the possibility of generating a space charge layer and an inert interface layer when the lithium-rich manganese-based positive electrode materials contact with sulfide solid electrolytes, and improves the migration efficiency of interface ions.

The present application also provides a preparation method of the above positive electrode material, which may prepare the above positive electrode material and has a simple process.

The present application also provides a positive electrode sheet, which, due to including the above positive electrode material, is helpful to improve the initial coulombic efficiency, discharge specific capacity and cycle performance of the battery when it is used in a battery.

The present application also provides an all-solid-state battery, which, due to including the above positive electrode sheet, has high initial coulombic efficiency, discharge specific capacity and cycle performance.

In a first aspect, the present application provides a positive electrode material, including a lithium-rich manganese-based positive electrode active material and a coating layer covering at least part of a surface of the lithium-rich manganese-based positive electrode active material, where a molecular formula of the lithium-rich manganese-based positive electrode active material is $xLi_{2-\alpha}MnO_3 \cdot (1-x)Li_{1-\beta}Ni_aCo_bMn_cO_{2-\gamma}$, where a+b+c=1, $0<\alpha+\beta \leq 0.2$, $0<\gamma \leq 0.1$, and $0<x<1$;

the coating layer meets the following Formula 1 and Formula 2:

$$0.5 \times 10^{-3} \text{ S/cm} \leq T \leq 5 \times 10^{-3} \text{S/cm} \qquad \text{Formula 1}$$

$$H \leq 10^{-9} \text{ S/cm} \qquad \text{Formula 2}$$

where T is an ionic conductivity of the coating layer, and H is an electronic conductivity of the coating layer.

Further, the coating layer includes a halide solid electrolyte material.

Further, a chemical composition of the halide solid electrolyte material is $Li_dMX_e$, where M is one or more of Ho, Y, Er and Yb, and X is Cl or Br; and $0 < d \leq 10$, and $1 \leq e \leq 13$。

Further, a thickness of the coating layer is at nanoscale, and prferably 5 to 80 nm. Further, a mass ratio of the coating layer in the positive electrode material is 0.1% to 0.5%.

Further, the coating layer is dense and free of pores, or contains micropores with a pore diameter of not exceeding 5 nm.

Further, a specific surface area of the positive electrode material is 0.5 to 1.3 $m^2/g$; and/or, a size of single crystal grains of the positive electrode material is 0.7 to 1.5 $\mu$m, and the particle diameter of the positive electrode material is 4 to 6 $\mu$m.

In a second aspect, the present application provides a preparation method of the above positive electrode material, including the following steps:

1) mixing an oxide of M, an ammonium salt, a lithium salt and an HX solution, and stirring at 20 to 90°C to obtain a mixed solution with a pH of 1 to 3; where M is one or more of Ho, Y, Er and Yb, and X is Cl or Br;

2) immersing the lithium-rich manganese-based material in the mixed solution, standing for 1 to 5 min, and drying to obtain a precursor; and

3) in a protective atmosphere, heating the precursor to 400 to 600°C at a heating rate of 1 to 10°C/min, and holding for 4 to 6 h to obtain the positive electrode material.

Further, a general formula of the lithium-rich manganese-based material is $xLi_2MnO_3 \cdot (1-x)LiNi_aCo_bMn_cO_2$, where $a + b + c = 1$, $0 \leq a \leq 1$, $0 \leq b \leq 1$, $0 \leq c \leq 1$, and $0 < x < 1$.

Further, a solid-to-liquid ratio of the lithium-rich manganese-based material and the mixed solution is (50-100) g : (0.1-1) L.

In a third aspect, the present application provides a positive electrode sheet, including a positive electrode active layer and a current collector; where the positive electrode active layer includes the above positive electrode material, a sulfide solid electrolyte, a conductive agent and a binder.

In a fourth aspect, the present application provides an all-solid-state battery, including the above positive electrode sheet.

The positive electrode material provided in the present application solves the problem of low initial coulombic efficiency of lithium-rich manganese-based positive electrode material, and at the same time, reduces the possibility of generating a space charge layer and an inert interface layer when the lithium-rich manganese-based positive electrode material contacts with the sulfide solid electrolyte, and improves the migration efficiency of interface ions, and the stability of the positive electrode material, thereby being beneficial to simultaneously improving the initial coulombic efficiency, discharge specific capacity and cycle performance of an all-solid-state battery system.

## BRIEF DESCRIPTION OF DRAWINGS

The drawings, which are incorporated in and constitute a part of this specification, illustrate examples consistent with the present application and, together with the description, serve to explain principles of the present application.

FIG. 1 is an SEM image of a lithium-rich manganese-based positive electrode active material of Example 1 at a magnification of 50,000.

FIG. 2 is an SEM image of a positive electrode material of Example 1 at a magnification of 50,000.

FIG. 3 is an SEM image of a positive electrode material of Comparative Example 1 at a magnification of 50,000.

FIG. 4 is an SEM image of the lithium-rich manganese-based positive electrode active material of Example 1 at a magnification of 9,000.

FIG. 5 is an SEM image of the positive electrode material of Example 1 at a magnification of 9,000.

## DESCRIPTION OF EMBODIMENTS

In order to make those skilled in the art better understand solutions of the present application, the present application is further illustrated in detail below. The specific embodiments listed below are only for describing the principles and features of the present application, and the given examples are only for explaining the present application, not for limiting the scope of the present application. Based on the examples of the present application, all other embodiments obtained by those ordinarily skilled in the art without creative work belong to the scope of protection of the present application.

In order to solve the problems of solving low initial coulombic efficiency of a lithium-rich manganese-based positive electrode material and of reducing the interface reaction between the lithium-rich manganese-based positive electrode material and a sulfide solid electrolyte, the present application adopts the following technical solutions.

On one hand, the present application provides a positive electrode material, including a lithium-rich manganese-based positive electrode active material and a coating layer covering at least part of a surface of the lithium-rich manganese-based positive electrode active material, where a molecular formula of the lithium-rich manganese-based positive electrode active material is $xLi_{2-\alpha}MnO_3\cdot(1-x)Li_{1-\beta}Ni_aCo_bMn_cO_{2-\gamma}$, where $a + b + c = 1$, $0 < \alpha + \beta \leq 0.2$, $0 < \gamma \leq 0.1$, and $0 < x < 1$;

the coating layer meets the following Formula 1 and Formula 2:

$$0.5 \times 10^{-3}\,S/cm \leq T \leq 5\times10^{-3}\,S/cm \qquad \text{Formula 1}$$

$$H \leq 10^{-9}\,S/cm \qquad \text{Formula 2}$$

where T is an ionic conductivity of the coating layer, and H is an electronic conductivity of the coating layer.

It is to be noted that the molecular formula of the lithium-rich manganese-based positive electrode active material is substantially the same as that of the existing conventional lithium-rich manganese-based materials, and the main difference lies in the existence of a lithium defect and an oxygen defect. The molecular formula of the lithium-rich manganese-based positive electrode active material is $xLi_{2-\alpha}MnO_3\cdot(1-x)Li_{1-\beta}Ni_aCo_bMn_cO_{2-\gamma}$, where $a + b + c = 1$, $0 < \alpha + \beta \leq 0.2$, and $0 < \gamma \leq 0.1$. It can be understood that $0 \leq a \leq 1$, $0 \leq b \leq 1$, $0 \leq c \leq 1$, and $a + b + c = 1$, and that $\alpha + \beta$ is the lithium defect of the entire material system. Exemplarily, the degree of lithium defect may be confirmed by conventional detection methods such as ICP, and the degree of oxygen defect may be calculated according to charge conservation.

In addition, the T value and H value in the present application are obtained by testing an ionic conductivity and electronic conductivity of a coating material consistent with the above coating layer. For example, the coating material consistent with the coating layer is prepared first, or the coating material is physically peeled off from the coating layer; and then the T value and H value of the coating material are tested.

Exemplarily, a method for testing the T value of the coating material is that the ionic conductivity is tested by an AC impedance method. For example, the following method may be adopted: weighing 200 mg of the coating material and pouring it into a mold battery with a diameter of 10 mm, then holding for 10 min at a pressure of 3 tons, measuring a thickness of a pressurized electrolyte membrane, then placing the mold battery in an oven at 25°C for more than 2 h to ensure the consistency of the test temperature, and then connecting an electrochemical workstation for the AC impedance test with a testing frequency of 1 Hz to $1\times10^6$ Hz. The ionic conductivity may be obtained according to the AC impedance value obtained by the test, and thickness and area of the electrolyte sheet in combination with the ionic conductivity formula ($\sigma = L/RS$, where $\sigma$ is the ionic conductivity, L is the thickness of the electrolyte sheet, S is the area of the electrolyte sheet, and R is the ionic resistance obtained by the test).

The test method of the H value of the coating material is that the electronic conductivity is tested by a DC polarization method. For example, the following method may be adopted: weighing 200 mg of the coating material, pouring it into a mold battery with a diameter of 10 mm, then holding for 10 min under a pressure of 3 tons, measuring a thickness of a pressurized electrolyte membrane, then placing the mold battery in an oven at 25°C for more than 2 h to ensure the consistency of the test temperature, then connecting a electrochemical workstation for the DC polarization test, and then setting a test bias voltage to be 0.1 V. An electronic resistance may be obtained according to the current obtained by the test, and the electronic conductivity may be obtained by substituting the electronic resistance, and the thickness and area of the electrolyte sheet into the conductivity formula ($\sigma = L/RS$, where $\sigma$ is the electronic conductivity, L is the thickness of the electrolyte sheet, S is the area of the electrolyte sheet, and R is the electronic resistance).

The reasons why the positive electrode material provided in the present application has a high initial coulombic efficiency and discharge specific capacity are as follows: first, the above lithium-rich manganese-based positive electrode active material has a certain lithium defect, and this defective lithium-rich manganese-based positive electrode active material has high ability to deintercalate lithium ion, which is beneficial to improving the initial coulombic efficiency and discharge specific capacity of the lithium-rich manganese-based positive electrode active material; meanwhile, a certain lithium defect may also alleviate the irreversible phase transition at high voltage caused by the massive lithium ion deintercalation during charging and discharging, which is beneficial to maintaining the crystal structure stability of the positive electrode material and alleviating the metal dissolution, so that the positive electrode material has both high specific capacity and cycling stability; second, compared with the sulfide solid electrolyte, the traditional lithium-rich manganese-based positive electrode active material has higher electronic conductivity, and when the traditional lithium-rich manganese-based positive electrode active material contacts with the sulfide solid electrolyte, which is a single lithium-ion conductor, lithium ions will move from the sulfide solid electrolyte side toward the positive electrode active material side due to a large chemical potential difference of the lithium ions between the two, and a space charge layer may be formed between the electrode and the electrolyte; because the positive electrode active material has both electron conductivity and ionic conductivity, the electron may eliminate the concentration gradient of lithium ions on the electrode side, so that the space charge layer on the electrode side disappears, whereas the lithium ions on the sulfide electrolyte side will inevitably continue to move toward the positive electrode in order to achieve chemical potential equilibrium, and the space charge layer will continue to be generated. This eventually leads to a lithium-depleted layer on the electrolyte side, forming a very large interface resistance. In the present application, by introducing a halide coating layer, which is ion-conductive but nearly electron-insulating, between the defective lithium-rich manganese-based positive electrode active material and the solid electrolyte, two new interfaces, namely, an electrode/halide layer interface and a solid electrolyte/halide layer interface, may be formed, which may effectively inhibit the generation of the space charge layer, and at the same time, due to the appearance of the new interfaces, a side reaction caused by the direct contact between the lithium-rich manganese-based positive electrode active material and the low-voltage window sulfide solid electrolyte is avoided, and the migration efficiency of the interface ions is improved, which may effectively improve the initial coulombic efficiency and discharge specific capacity of the battery system.

In a preferred embodiment, the coating layer includes a halide solid electrolyte material.

In a specific embodiment, a chemical composition of the halide solid electrolyte material is $Li_dMX_e$, where M is one or more of Ho, Y, Er and Yb, and X is Cl or Br; $0 < d \leq 10$, and $1 \leq e \leq 13$. Where the chemical composition of the halide solid electrolyte material determines the ionic conductivity and electronic conductivity of the coating layer, and the halide solid electrolyte material within the scope of the above embodiments may meet the requirements of high ionic conductivity in the present application.

In a preferred embodiment, X is Cl, where the coating layer of chloride solid electrolyte material is helpful to further improve the stability of the positive electrode material, thereby further improving the cycling stability of the battery system.

In a preferred embodiment, the thickness of the coating layer is at the nanoscale, and is preferably 5 to 80 nm.

The thickness of the coating layer may be measured by conventional testing instruments, for example, using a high-resolution transmission electron microscope (HRTEM) for observation and measurement; exemplarily, the thickness of the coating layer includes but is not limited to any value of 10 nm, 15 nm, 20 nm, 25 nm, 30 nm, 35 nm, 40 nm, 45 nm, 50 nm, 55 nm, 60 nm, 65 nm, 70 nm, 75 nm, etc.

In a preferred embodiment, a mass ratio of the coating layer in the positive electrode material is 0.1% to 0.5%.

It can be understood that the mass ratio of the coating layer in the positive electrode material may reflect the degree to which the coating layer covers the positive electrode material. If the mass ratio of the coating layer in the positive electrode material is too low, the initial coulombic efficiency and discharge specific capacity of the positive electrode material will not be significantly improved, whereas if the mass ratio of the coating layer in the positive electrode material is too high, the conductivity of the positive electrode material will be adversely affected. In a preferred embodiment, the coating layer is dense and free of pores, or contains micropores with a pore diameter of not exceeding 5 nm. Where the coating layer is dense and free of pores, or contains micropores, which may enable the coating layer to be tightly and evenly coated on the surface of the lithium-rich manganese-based positive electrode active material. This is not only beneficial to further inhibiting the generation of the space charge layer, but also avoiding the side reaction caused by direct contact between the lithium-rich manganese-based positive electrode active material and sulfide solid electrolyte, and furthermore, the dense coating layer is also beneficial to inhibiting the expansion phenomenon of the positive electrode material, thereby contributing to improving the stability and safety of the all-solid-state battery system. The mass ratio of the coating layer in the positive electrode material may reflect the extent to which the coating layer coats the positive electrode material. If the mass ratio of the coating layer in the positive electrode material is too low, the initial coulombic efficiency and discharge specific capacity of the positive electrode material will not be significantly improved, whereas if the mass ratio of the coating layer in the positive electrode material is too high, the conductivity of the positive electrode material will be adversely affected.

In a preferred embodiment, the specific surface area of the positive electrode material is 0.5 to 1.3 $m^2/g$; and/or, a size of single crystal grains of the positive electrode material is 0.7 to 1.5 $\mu m$, and a particle diameter of the positive electrode material is 4 to 6 $\mu m$.

It can be understood that the traditional lithium-rich manganese-based material is in a polycrystalline structure formed by a plurality of crystal grains, so the positive electrode material of the present application is also in a polycrystalline structure. The size of the single crystal grains described above refers to that a maximum size of the crystal grain is in a range of 0.7 to 1.5 $\mu m$, and the particle diameter of the positive electrode material refers to that a maximum size of the positive electrode material in a polycrystalline structure is in a range of 4 to 6 $\mu m$. As for the size of the single crystal grains and the particle diameter of the positive electrode material, they may be obtained by SEM observation and measure. For example, a surface morphology image of the positive electrode material is obtained by using SEM, the magnification of the image is set to 9000 times, a test point is taken in the image to measure the particle diameter of the positive electrode material within the test point, and then the magnification of the image is set to 50000 times, and a test point is taken in the image to measure the size of the single crystal grains within the test point.

The positive electrode material with the above size may further ensure the dynamic performance and specific capacity of the positive electrode material; and the positive electrode material with the specific surface area within the above range may further ensure the cycle performance of the battery without affecting its rate performance. The reason is that a large specific surface area of the positive electrode material may ensure the rate performance of the battery, but an excessively large specific surface area may lead to low compaction density, which is not beneficial to its application in a high energy density system.

In a preferred embodiment, the above positive electrode material is prepared by a method including the following processes:

1) mixing an oxide of M, an ammonium salt, a lithium salt and an HX solution, and stirring at 20 to 90°C to obtain a mixed solution with a pH of 1 to 3; where M is one or more of Ho, Y, Er and Yb, and X is Cl or Br;

2) immersing the lithium-rich manganese-based material in the mixed solution, standing for 1 to 5 min, and drying to obtain a precursor; and

3) in a protective atmosphere, heating the precursor to 400 to 600°C at a heating rate of 1 to 10°C/min, and holding for 4 to 6 h to obtain the positive electrode material.

Exemplarily, the ammonium salt may be ammonium chloride, ammonium nitrate, etc., and the lithium salt may be lithium carbonate, lithium nitrate, lithium chloride, etc.

In a second aspect, the present application provides a preparation method of the above positive electrode material, which includes the following steps:

1) mixing an oxide of M, an ammonium salt, a lithium salt and an HX solution, and stirring at 20 to 90°C to obtain a mixed solution with a pH of 1 to 3; where M is one or more of Ho, Y, Er and Yb, and X is Cl or Br;

2) immersing the lithium-rich manganese-based material in the mixed solution, standing for 1 to 5 min, and drying to obtain a precursor; and

3) in a protective atmosphere, heating the precursor to 400 to 600°C at a heating rate of 1 to 10°C/min, and holding for 4 to 6 h to obtain the positive electrode material.

Through research, it is found that the above preparation process may ensure that the defect degree of the lithium-rich manganese-based positive electrode active material is within a suitable range and the coating effect of the coating layer is better, thereby ensuring that the all-solid-state battery system has excellent initial coulombic efficiency, discharge specific capacity and cycle performance. The defect degree of the lithium-rich manganese-based positive electrode active material and the coating effect of the coating layer cannot be ensured when the standing time in Step 2) is too long, or the pH of the mixed solution is not within the above range, or the preparation process is changed to: first, acid etching, and then coating the acid-etched lithium-rich manganese-based material with a neutral mixed solution containing the halide solid electrolyte precursor.

In the above preparation method, the oxide of M, the ammonium salt and the lithium salt are dissolved in the acidic HX solution, and a chemical reaction occurs at this time. When $Ho_2O_3$, $NH_4Cl$, $Li_2CO_3$ and HCl are taken as an example, the chemical reaction equation is as follows:

$Ho_2O_3 + 3Li_2CO_3 + (6 + n)HCl + 6NH_4Cl \rightarrow 2(NH_4)_3[HoCl_6] + 6LiCl + 6H_2O + 3CO_2(\uparrow)$; however, due to excessive n mol of the HCl solution, the mixed solution obtained after the reaction contains a halide solid electrolyte precursor, and the liquid is weak acidic. At this time, adding the lithium-rich manganese-based positive electrode active material into the acidic mixed solution may increase defects on its surface and wash away excess $Li^+$, forming a lithium-rich manganese-based positive electrode material with a $Li^+$-deficient structure, and at the same time, the halide solid electrolyte precursor in the mixed solution is attached to the surface of the lithium-rich manganese-based positive electrode active material. After filtration, drying and vacuum sintering, a thin halide solid electrolyte coating layer may be formed on the surface of the lithium-rich manganese-based positive electrode active material in situ, with the chemical reaction equation as follows:

$(NH_4)_3[HoCl_6] + 3LiCl \rightarrow Li_3HoCl_6 + 3NH_3(\uparrow) + 3HCl(\uparrow)$; the $Li_3HoCl_6$ coating layer is helpful to alleviate the problem of low ion transport capacity within the lithium-rich manganese-based positive electrode active material, and at the same time effectively inhibit the volume expansion of the positive electrode material. Where, the pH and standing time of the mixed solution may affect the defect degree of the lithium-rich manganese-based positive electrode active material, while the sintering conditions of the precursor may affect the ionic conductivity and compactness of the coating layer. If the sintering temperature is too high or the heating rate is too high, the ionic conductivity of the coating layer will decrease, and furthermore, due to excessively rapid volatilization of $NH_3$ and HCl gases, the pore diameter of the coating layer will become larger, and its coating structure is no longer compact.

Exemplarily, the above ammonium salt may be ammonium chloride, ammonium bromide, etc., and the above lithium salt may be lithium carbonate, lithium chloride, lithium bromide, etc.

It can be understood that the lithium-rich manganese-based material in Step 2) described above is a traditional lithium-rich manganese-based material without lithium defect, and may be commercially purchased or prepared by a conventional method. Exemplarily, the general formula of the above lithium-rich manganese-based material is $xLi_2MnO_3 \cdot (1-x)LiNi_aCo_bMn_cO_2$, where $a + b + c = 1$, $0 \leq a \leq 1$, $0 \leq b \leq 1$, $0 \leq c \leq 1$, and $0 < x < 1$.

As for the solid-to-liquid ratio of the lithium-rich manganese-based material and the mixed solution in Step 2), it is not particularly limited in the present application, and may be adjusted by persons skilled in the art according to the coating amount, coating thickness and defect degree to be produced of the coating layer as required, for example, the solid-to-liquid ratio is 50-100g: 0.1-1L.

In a specific embodiment, it further includes a step of pulverizing the positive electrode material, and the purpose of this step is only to break up the large agglomerates formed during sintering.

In a third aspect, the present application provides a positive electrode sheet, which includes a positive electrode active layer and a current collector, where the positive electrode active layer includes the above positive electrode material, a sulfide solid electrolyte, a conductive agent and a binder.

Exemplarily, the material of the above current collector may be at least one of aluminum foil and nickel foil; the conductive agent may be at least one of carbon black, acetylene black, graphene, Ketjen black and carbon fiber; the binder may be at least one of polytetrafluoroethylene, polyvinylidene fluoride, polyvinyl fluoride, polyethylene, polypropylene, polyvinyl alcohol, carboxymethyl cellulose, hydroxypropyl cellulose, diacetyl cellulose, polyvinyl chloride, carboxylated polyvinyl chloride, polymer containing ethylene oxide, polyvinylpyrrolidone and polyurethane; and the sulfide solid electrolyte may be one of $Li_7P_3S_{11}$, $\beta\text{-}Li_3PS_4$, $Li_6PS_5Cl$, $Li_6PS_5Br$, $Li_7P_2S_8I$, $Li_4PS_4I$, $Li_6PS_5Cl_xBr_{1-x}$, $Li_6PS_5Cl_yI_{1-y}$, $Li_6PS_5Br_zI_{1-z}$, where x, y and z are from 0 to 1.

Exemplarily, a mas ratio of the positive electrode material, the sulfide solid electrolyte, the conductive agent and the binder may be (50-90) : (50-10) : (0.1-2) : (0.1-10).

Exemplarily, a preparation method of the above positive electrode sheet may include the following steps: weighing the positive electrode material, the sulfide solid electrolyte ($Li_6PS_5Cl$) and the conductive agent (VGCF) in a mass ratio of 85 : 15 : 1, placing them in a mortar, manually mixing for more than 30 minutes to obtain a mixed material, and then adding polytetrafluoroethylene particles (PTFE) with a mass ratio of 1% (1% of the mixed material), heating at 150°C for 5 minutes on a heating table, then manually grinding to form a film, so as to pre-fiberize PTFE, then heating and rolling the obtained film on a calender at 100°C, adjusting the thickness of the obtained film by controlling the gap width between two hot rollers, and repeatedly rolling to obtain a shaped composite positive electrode material film with a thickness of 40 to 60 $\mu$m, and calendering the composite positive electrode material film to the surface of an Al foil current collector with a thickness of 15 $\mu$m to obtain a positive electrode sheet.

In a fourth aspect, the present application provides an all-solid-state battery, which includes the above positive electrode sheet.

Exemplarily, the all-solid-state battery further includes a sulfide solid electrolyte membrane and a negative electrode, where the negative electrode may be at least one of lithium metal alloy, lithium metal, graphite, Si-C composite negative electrode, metal indium and the like; the material of the sulfide solid electrolyte membrane may be at least one of $Li_7P_3S_{11}$, $\beta\text{-}Li_3PS_4$, $Li_6PS_5Cl$, $Li_6PS_5Br$, $Li_7P_2S_8I$, $Li_4PS_4I$, $Li_6PS_5Cl_xBr_{1-x}$, $Li_6PS_5Cl_yI_{1-y}$, $Li_6PS_5Br_zI_{1-z}$, etc., where x, y and $0 < z < 1$.

The present application will be further described with specific examples in the following.

Example 1

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material has a lithium-deficient crystal structure; and an ionic conductivity of the coating layer is $1.20 \times 10^{-3}$ S/cm, and an electronic conductivity of the coating layer is $4.31 \times 10^{-10}$ S/cm.

A preparation method thereof includes the following steps:

1) dissolving: dissolving 0.1 mol, 0.3 mol and 0.6 mol of raw materials $Ho_2O_3$, $Li_2CO_3$ and $NH_4Cl$ into 0.5 L of 2.41 mol/L HCl solution, heating and stirring for 1 h at a rotation speed of 400 r/min to obtain a mixed solution (pH is 1.97) containing a halide solid electrolyte precursor;

2) mixing: putting 50 g of a lithium-rich manganese-based material (molecular formula: $0.5Li_2MnO_3 \cdot 0.5LiNi_{0.7}Mn_{0.3}O_2$) into 0.1 L of the mixed solution and standing for 2 minutes;

3) drying: filtering out the lithium-rich manganese-based positive electrode active material attached with the halide solid electrolyte precursor and drying in an oven at 80°C to obtain the lithium-rich manganese-based positive electrode active material coated with the halide solid electrolyte precursor;

4) sintering process: sintering the sample of the lithium-rich manganese-based positive electrode active material coated with the halide solid electrolyte precursor in a tube furnace in an Ar atmosphere with a heating rate of 3°C/min in the tube furnace, heating to the sintering temperature of 500°C from room temperature and maintaining for 4h at the temperature, to obtain the positive electrode material; and

5) material crushing: grinding the positive electrode material obtained by sintering in a crusher to obtain a final product.

The ionic conductivity and electronic conductivity of the coating layer of this example are tested by the following steps:

S1, preparing the constituent material of the coating layer, the process of which refers to the preparation of the positive electrode material of this example, with the difference only in that Step 2) is not performed, that is, the mixed solution is directly dried in an oven at 80 °C and then sintered;

S2, ionic conductivity test: weighing 200 mg of the coating material and pouring it into a mold battery with a diameter of 10 mm, then keeping a pressure at 3 tons for 10 minutes, measuring the thickness of the pressurized electrolyte membrane, then putting the mold battery into an oven at 25°C for more than 2 hours to ensure the consistency of the test temperature, and then connecting an electrochemical workstation to conduct an AC impedance test with a test frequency of 1 Hz to $1\times10^6$Hz; According to the AC impedance value obtained by the test, and the thickness and area of the electrolyte sheet in combination with the ionic conductivity formula ($\sigma = L/RS$, where $\sigma$ is the ionic conductivity, L is the thickness of the electrolyte sheet, S is the area of the electrolyte sheet, and R is the ionic resistance obtained by the test), the ionic conductivity may be obtained; and

S3, electronic conductivity test: weighing 200 mg of the coating material and pouring it into a mold battery with a diameter of 10 mm, then maintaining a pressure at 3 tons for 10 minutes, measuring a thickness of the pressurized electrolyte membrane, then placing the mold battery in an oven at 25°C for more than 2 hours to ensure the consistency of the test temperature, and then connecting an electrochemical workstation for DC polarization method test, and setting the test bias voltage as 0.1 V; according to the measured current, the electronic resistance may be obtained, and the electronic conductivity may be obtained by substituting the electronic resistance and the thickness and area of the electrolyte sheet into the conductivity formula ($\sigma = L / RS$, where $\sigma$ is the electronic conductivity, L is the thickness of the electrolyte sheet, S is the area of the electrolyte sheet, and R is the electronic resistance).

Example 2

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $1.21\times10^{-3}$ S/cm, and the electronic conductivity of the constituent material of the coating layer is $4.30\times10^{-10}$ S/cm (the test method may refer to Example 1).

The preparation method thereof is substantially the same as that in Example 1, and the difference is that the concentration of the HCl solution is 2.45 mol/L, and the mixed solution containing the halide solid electrolyte precursor has a pH of 1.30.

Example 3

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $1.19\times10^{-3}$ S/cm, and the electronic conductivity of the constituent material of the coating layer is $4.32\times10^{-10}$ S/cm (the test method may refer to Example 1).

The preparation method thereof is substantially the same as that in Example 1, and the difference is that the concentration of the HCl solution is 2.50 mol/L, and the mixed solution containing the halide solid electrolyte precursor has a pH of 1.

Example 4

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $1.04\times10^{-3}$ S/cm, and the electronic conductivity of the constituent material of the coating layer is $2.62\times10^{-10}$ S/cm (the test method may refer to Example 1).

The preparation method thereof is substantially the same as that in Example 1, and the difference is that $Ho_2O_3$ is replaced with $Y_2O_3$.

Example 5

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $1.16 \times 10^{-3}$ S/cm, and the electronic conductivity of the constituent material of the coating layer is $4.23 \times 10^{-10}$ S/cm (the test method may refer to Example 1).

The preparation method thereof is substantially the same as that in Example 1, and the difference is that the standing time in Step 2) is 1 minute.

Example 6

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $1.15 \times 10^{-3}$ S/cm, and the electronic conductivity of the constituent material of the coating layer is $4.22 \times 10^{-10}$ S/cm (refer to Example 1 for the test method).

The preparation method thereof is substantially the same as that in Example 1, and the difference is that the standing time in Step 2) is 5 minutes.

Example 7

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $1.18 \times 10^{-3}$ S/cm, and the electronic conductivity of the constituent material of the coating layer is $4.26 \times 10^{-10}$ S/cm (the test method may refer to Example 1).

The preparation method thereof is substantially the same as that in Example 1, and the difference is that the volume of the HCl solution in Step 1) is changed to 0.1 L (keeping the PH value consistent with that in Example 1).

Example 8

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $1.16 \times 10^{-3}$ S/cm, and the electronic conductivity of the constituent material of the coating layer is $4.14 \times 10^{-10}$ S/cm (the test method may refer to Example 1).

The preparation method thereof is substantially the same as that in Example 1, and the difference is that the molecular formula of the lithium-rich manganese-based material in Step 2) is $0.3Li_2MnO_3 \cdot 0.7Li\ Ni_{0.7}Mn_{0.3}O_2$.

Example 9

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $1.18 \times 10^{-3}$ S/cm, and the electronic conductivity of the constituent material of the coating layer is $4.23 \times 10^{-10}$ S/cm (the test method may refer to Example 1).

The preparation method thereof is substantially the same as that in Example 1, and the difference is that the molecular formula of the lithium-rich manganese-based material in Step 2) is $0.7Li_2MnO_3 \cdot 0.3Li\ Ni_{0.7}Mn_{0.3}O_2$.

Example 10

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $3.72 \times 10^{-3}$ S/cm, and the electronic conductivity of the constituent material of the coating layer is $4.03 \times 10^{-10}$ S/cm (the test method may refer to Example 1).

The preparation method thereof is substantially the same as that in Example 1, and the difference is that the $Ho_2O_3$ in Step 1) is changed to $Er_2O_3$, and the HCl solution is changed to the HBr solution (the PH unchanged).

Example 11

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $3.93 \times 10^{-3}$ S/cm, and the electronic conductivity of the constituent material of the coating layer is $4.68 \times 10^{-10}$ S/cm (the test method may refer to Example 1).

The preparation method thereof is substantially the same as that in Example 1, and the difference is that the $Ho_2O_3$ in Step 1) is changed to $Yb_2O_3$, and the HCl solution is changed to the HBr solution (the PH unchanged).

Example 12

This example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $0.54 \times 10^{-3}$ S/cm, and the electronic conductivity of the constituent material of the coating layer is $4.21 \times 10^{-10}$ S/cm (the test method may refer to Example 1).

The preparation method thereof is substantially the same as that in Example 1, and the difference is that the $Ho_2O_3$ in Step 1) is changed to $Dy_2O_3$, and the HCl solution is changed to the HBr solution (PH unchanged).

Comparative example 1

This comparative example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is not modified; and the ionic conductivity of the constituent material of the coating layer is $1.17 \times 10^{-3}$ S/cm, and the electronic conductivity of the constituent material of the coating layer is $4.14 \times 10^{-10}$ S/cm (the test method may refer to Example 1).

The preparation method thereof includes the following steps:

1) dissolving: dissolving 0.1 mol, 0.3mol and 0.6mol of raw materials $Ho_2O_3$, $Li_2CO_3$ and $NH_4Cl$ into 0.5 L of 2.41mol/L HCl solution, and heating and stirring for 1 h at a rotation speed of 400 r/min to obtain a mixed solution (pH is 1.97) containing the halide solid electrolyte precursor;
2) drying: drying the halide solid electrolyte precursor solution in an oven at 80°C to obtain the halide solid electrolyte precursor;
3) sintering process: sintering a sample of the halide solid electrolyte precursor in a tube furnace (heating rate is 3°C/min) in an Ar atmosphere, where the sintering temperature is 500°C, and the holding time is 4 h; and
4) mixing: uniformly mixing the halide solid electrolyte powder with the mass corresponding to the in-situ coating with the lithium-rich manganese-based positive electrode active material in a high-speed mixer at a rotating speed of 1000 rpm, and then cooling to room temperature, to obtain the positive electrode material.

Comparative Example 2

This comparative example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $1.18 \times 10^{-3}$ S/cm, and the electronic conductivity of the constituent material of the coating layer is $4.16 \times 10^{-10}$ S/cm (the test method may refer to Example 1).

The preparation method thereof is substantially the same as that in Example 1, and the difference is that the standing time in Step 2) is 20 minutes.

Comparative Example 3

This comparative example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $1.17 \times 10^{-3}$ S/cm, and the electronic conductivity of the constituent material of the coating layer is $4.19 \times 10^{-10}$ S/cm (the test method may refer to Example 1).

The preparation method thereof is substantially the same as in Example 1, and the difference is that the pH of the mixed solution containing the halide solid electrolyte precursor is 0.20.

Comparative Example 4

This comparative example provides a positive electrode material, which includes a lithium-rich manganese-based positive electrode active material and a coating layer covering at least part of a surface of the lithium-rich manganese-based positive electrode active material, where the lithium-rich manganese-based positive electrode active material is a lithium-deficient crystal structure; and the ionic conductivity of the constituent material of the coating layer is $5.24 \times 10^{-5}$ S/cm, and the electronic conductivity of the constituent material of the coating layer is $2.16 \times 10^{-10}$ S/cm.

The preparation method thereof is substantially the same as that of Example 1 (the test method may refer to Example 1), and the difference is that the sintering temperature is 800°C.

Comparative Example 5

The positive electrode material provided in this comparative example is a lithium-rich manganese-based material (molecular formula: $0.5Li_2MnO_3 \cdot 0.5Li Ni_{0.7}Mn_{0.3}O_2$) without any modification.

The positive electrode materials in the examples and the comparative examples were tested as follows:

1. the morphologies of the positive electrode materials in the examples were observed by HRTEM;

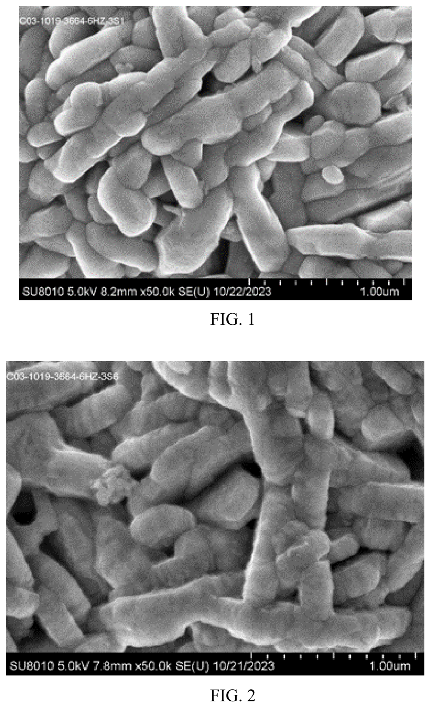

2. the morphologies of the positive electrode materials before and after coating in the examples and the comparative examples were observed by SEM, where the microscopic morphologies of the positive electrode materials before and after coating in Example 1 and the microscopic morphologies of the positive electrode materials of Comparative Example 1 are shown in FIG. 1- FIG. 5;

3. the general formula of the lithium-rich manganese-based positive electrode active materials in the examples or the comparative examples is $xLi_{2-\alpha}MnO_3 \cdot (1-x)Li_{1-\beta}Ni_aCo_bMn_cO_{2-\gamma}$, where $a + b + c = 1, 0 < \alpha + \beta \leq 0.2$, and $0 < \gamma \leq 0.1$; "$\alpha + \beta$" refers to the the overall defect degree of lithium in the positive electrode material, "$\gamma$" refers to the overall defect degree of oxygen in the positive electrode material, the lithium content of the positive electrode material is determined by ICP, the defect degree of lithium is obtained through conversion, and then the defect degree of oxygen is calculated.

4. specific surface area: the specific surface area was tested by BET; and

5. mass ratio of coating layer: the mass of lithium-rich manganese-based material before coating is recorded as X, the mass of positive electrode material after coating with the halide solid electrolyte is recorded as Y, and the mass ratio of the coating Layer = (Y-X)/Y.

At least some of the above test results are summarized in Table 1.

Table 1

| Group | Li content (%) | Defect degree | Chemical composition of coating layer | Mass ratio of coating layer (%) | Ionic conductivity of coating layer (S/cm) | Electronic conductivity of coating layer (S/cm) | Specific surface area of positive electrode material ($m^2$/g) |
|---|---|---|---|---|---|---|---|
| Example 1 | 9.40 | $0.08 \leq \alpha+\beta \leq 0.10$ $0.04 \leq \gamma \leq 0.05$ | $Li_3HoCl_6$ | 0.4 | $1.20 \times 10^{-3}$ | $4.31 \times 10^{-10}$ | 0.8136 |
| Example 2 | 9.34 | $0.10 \leq \alpha+\beta \leq 0.12$ $0.05 \leq \gamma \leq 0.06$ | $Li_3HoCl_6$ | 0.4 | $1.21 \times 10^{-3}$ | $4.30 \times 10^{-10}$ | 0.8269 |
| Example 3 | 9.22 | $0.14 \leq \alpha+\beta \leq 0.16$ $0.07 \leq \gamma \leq 0.08$ | $Li_3HoCl_6$ | 0.4 | $1.19 \times 10^{-3}$ | $4.32 \times 10^{-10}$ | 0.8526 |
| Example 4 | 9.40 | $0.08 \leq \alpha+\beta \leq 0.10$ $0.04 \leq \gamma \leq 0.05$ | $Li_3YCl_6$ | 0.4 | $1.04 \times 10^{-3}$ | $2.62 \times 10^{-10}$ | 0.8178 |
| Example 5 | 9.47 | $0.06 \leq \alpha+\beta \leq 0.08$ $0.03 \leq \gamma \leq 0.04$ | $Li_3HoCl_6$ | 0.4 | $1.16 \times 10^{-3}$ | $4.23 \times 10^{-10}$ | 0.8190 |
| Example 6 | 9.25 | $0.12 \leq \alpha+\beta \leq 0.14$ $0.06 \leq \gamma \leq 0.07$ | $Li_3HoCl_6$ | 0.4 | $1.15 \times 10^{-3}$ | $4.22 \times 10^{-10}$ | 0.8794 |
| Example 7 | 9.41 | $0.08 \leq \alpha+\beta \leq 0.10$ $0.04 \leq \gamma \leq 0.05$ | $Li_3HoCl_6$ | 1.1 | $1.18 \times 10^{-3}$ | $4.26 \times 10^{-10}$ | 0.8122 |
| Example 8 | 8.45 | $0.06 \leq \alpha+\beta \leq 0.08$ $0.03 \leq \gamma \leq 0.04$ | $Li_3HoCl_6$ | 0.4 | $1.16 \times 10^{-3}$ | $4.14 \times 10^{-10}$ | 0.8322 |
| Example 9 | 10.21 | $0.12 \leq \alpha+\beta \leq 0.14$ $0.06 \leq \gamma \leq 0.07$ | $Li_3HoCl_6$ | 0.4 | $1.18 \times 10^{-3}$ | $4.23 \times 10^{-10}$ | 0.8393 |
| Example 10 | 9.40 | $0.08 \leq \alpha+\beta \leq 0.10$ $0.04 \leq \gamma \leq 0.05$ | $Li_3ErBr_6$ | 0.4 | $3.72 \times 10^{-3}$ | $4.03 \times 10^{-10}$ | 0.8226 |
| Example 11 | 9.40 | $0.08 \leq \alpha+\beta \leq 0.10$ $0.04 \leq \gamma \leq 0.05$ | $Li_3YbBr_6$ | 0.4 | $3.93 \times 10^{-3}$ | $4.68 \times 10^{-10}$ | 0.8366 |
| Example 12 | 9.40 | $0.08 \leq \alpha+\beta \leq 0.10$ $0.04 \leq \gamma \leq 0.05$ | $Li_3DyCl_6$ | 0.4 | $0.54 \times 10^{-3}$ | $4.21 \times 10^{-10}$ | 0.8236 |
| Comparative Example 1 | 9.70 | - | $Li_3HoCl_6$ | 0.4 | $1.17 \times 10^{-3}$ | $4.14 \times 10^{-10}$ | 0.8106 |
| Comparative Example 2 | 8.95 | $0.22 \leq \alpha+\beta \leq 0.24$ $0.11 \leq \gamma \leq 0.12$ | $Li_3HoCl_6$ | 0.4 | $1.18 \times 10^{-3}$ | $4.16 \times 10^{-10}$ | 0.9630 |
| Comparative Example 3 | 9.00 | $0.21 \leq \alpha+\beta \leq 0.23$ $0.105 \leq \gamma \leq 0.115$ | $Li_3HoCl_6$ | 0.4 | $1.17 \times 10^{-3}$ | $4.19 \times 10^{-10}$ | 0.8163 |
| Comparative Example 4 | 9.39 | $0.08 \leq \alpha+\beta \leq 0.10$ $0.04 \leq \gamma \leq 0.05$ | $Li_3HoCl_6$ | 0.4 | $5.24 \times 10^{-5}$ | $2.16 \times 10^{-10}$ | 0.9524 |
| Comparative Example 5 | 9.72 | / | / | / | / | / | / |

In the table, "-" means that the result is not recorded.

According to the results of HRTEM test, it can be known that the thicknesses of the coating layers of the positive electrode materials of the examples are all in a range of 5 to 80 nm, and the thickness of the coating layer of the positive electrode material of Example 1 is in a range of 20 to 60 nm.

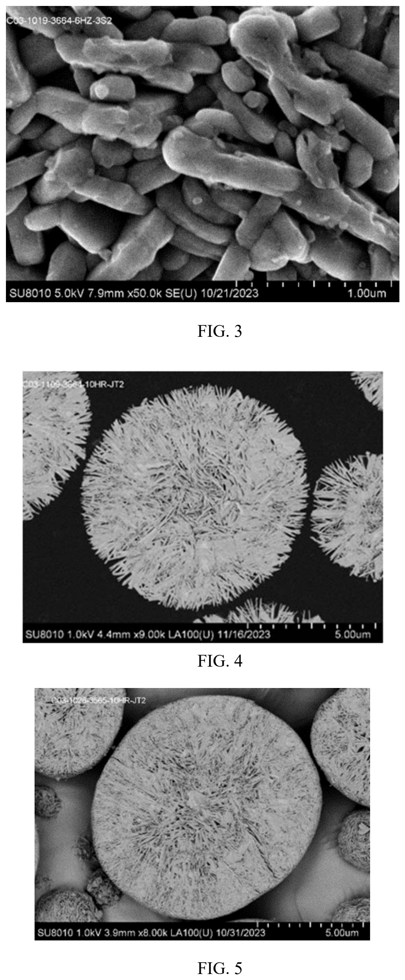

As can be seen from FIGs. 1 to 2, before in-situ coating, the surface of the lithium-rich manganese-based material is relatively regular, and after in-situ coating, the surface is coated with a dense and essentially pore-free amorphous halide solid electrolyte coating layer, and the size of single crystal grains of the positive electrode material is 0.7 to 1.5 $\mu$m; and the positive electrode materials of other examples are similar to that of Example 1. As can be seen from FIG. 3, the mechanical mixing and coating in Comparative Example 1 can enable only a small amount of halide solid electrolyte to be attached to the surface of the positive electrode, and the coating was uneven. It can also be seen from FIG. 4 and FIG. 5 that the surface of the lithium-rich manganese-based positive electrode material is coated with the halide solid electrolyte, and it can be seen that the particle diameter of the positive electrode material is 4 to 6 $\mu$m; and the positive electrode materials of other examples are similar to that of Example 1.

Application Example 1

Positive electrode sheets were prepared by using the positive electrode materials of the above examples and comparative examples, including the following steps:

the above positive electrode materials, a sulfide solid electrolyte ($Li_6PS_5Cl$) and a conductive agent (VGCF) was weighed in a mass ratio of 85: 15: 1 and placed into a mortar,

and manually mixed for more than 30 minutes to obtain a mixed material, then 1% by mass of polytetrafluoroethylene particles (accounting for 1% of the mixed material) was added thereto, and heated on a heating table at 150°C for 5 minutes and then manual grinding was conducted to form a film so as to pre-fiberize PTFE. Subsequently, the obtained film was heated and rolled on a calender at a rolling temperature of 100°C, and the thickness of the obtained film was adjusted by controlling the gap width between two hot-pressing rollers, and the formed composite positive electrode material film with a thickness of 40 to 60 $\mu$m was obtained by repeated rolling, and the composite positive electrode material film was calendered to a surface of Al foil current collector with a thickness of 15 $\mu$m to obtain a positive electrode sheet.

Application Example 2

All-solid-state batteries were prepared by using the above positive lectrode sheets, including the following steps: die-cutting the positive electrode sheets to a disc with a diameter of 8 mm, then laminating it with the $Li_6PS_5Cl$ sulfide solid electrolyte membrane and a LiIn negative electrode in a glove box filled with Ar atmosphere, followed by cold-pressing and the like to obtain the all-solid-state battery.

Performance Test:

The following electrical performance of the batteries assembled in Application Example 2 were tested (see Table 2 for the results):
Initial coulombic efficiency, first-cycle charge specific capacity, first-cycle discharge specific capacity, and capacity retention rate: the all-solid-state battery is charged at a constant current rate of 0.1 C at 25 to 30°C to a voltage of 4.2 V (vs. $Li^+$/LiIn), and the charge specific capacity at this time is recorded as the first-cycle charge specific capacity; then the battery is left to stand for 5 min, and then is discharged at a constant current rate of 0.1C to a voltage of 1.4 V (vs. $Li^+$/LiIn), recording the discharge specific capacity at this time as the first-cycle discharge specific capacity; initial coulombic efficiency (%) of the battery = first-cycle discharge specific capacity/first-cycle charge specific capacity $\times$ 100%; then, the battery is charged at a constant current rate of 1 C to a voltage of 4.2 V (vs. $Li^+$/LiIn), recording the charge specific capacity at this time as the first-cycle charge specific capacity, then the battery is left to stand for 5 min, and is discharged at a constant current rate of 1 C to a voltage of 1.4 V(vs. $Li^+$/LiIn); after 50 cycles, the discharge specific capacity of the 1st and 50th cycles is recorded, and Capacity Retention Rate = Discharge Specific Capacity at 50th cycle / Discharge Specific Capacity at 1st cycle $\times$ 100%.

Table 2

| Group | First-cycle charge specific capacity mAh/g | First-cycle discharge specific capacity mAh/g | Initial coulombic efficiency % | Capacity retention rate % |
|---|---|---|---|---|
| Example 1 | 294.3 | 276.3 | 93.9% | 99% |
| Example 2 | 288.4 | 283.6 | 98.3% | 99% |
| Example 3 | 282.4 | 270.4 | 95.8% | 99% |
| Example 4 | 288.2 | 271.2 | 94.1% | 99% |

(continued)

| Group | First-cycle charge specific capacity mAh/g | First-cycle discharge specific capacity mAh/g | Initial coulombic efficiency % | Capacity retention rate % |
|---|---|---|---|---|
| Example 5 | 302.3 | 274.8 | 90.9% | 99% |
| Example 6 | 271.2 | 276.4 | 101.9% | 99% |
| Example 7 | 276.8 | 260.7 | 94.2% | 99% |
| Example 8 | 284.2 | 265.4 | 93.4% | 99% |
| Example 9 | 310.6 | 287.0 | 92.4% | 98% |
| Example 10 | 290.3 | 271.8 | 93.6% | 92% |
| Example 11 | 291.6 | 270.6 | 93.2% | 91% |
| Example 12 | 293.3 | 271.3 | 92.5% | 97% |
| Comparative Example 1 | 311.4 | 265.4 | 85.2% | 95% |
| Comparative Example 2 | 231.2 | 192.3 | 83.2% | 97% |
| Comparative Example 3 | 246.4 | 254.3 | 103.2% | 97% |
| Comparative Example 4 | 273.6 | 257.46 | 94.1% | 96% |
| Comparative Example 5 | 308.4 | 256.3 | 83.1% | 88% |

As can be seen from Table 2, compared with the traditional unmodified lithium-rich manganese-based material of Comparative Example 5, the lithium-rich manganese-based positive electrode active material of examples significantly improves the initial coulombic efficiency, discharge specific capacity and cycle performance of the all-solid-state battery system.

Furthermore, compared with the lithium-rich manganese-based with a non-lithium-deficient crystal structure in Comparative Example 1, the lithium-rich manganese-based positive electrode active material in the examples significantly improves the initial coulombic efficiency of the all-solid-state battery system while ensuring relatively high discharge specific capacity and cycle performance.

Furthermore, compared with Comparative Examples 2 to 4, the lithium-rich manganese-based positive electrode active materials of the examples, due to appropriate defect degree and/or ionic conductivity, significantly improves the discharge specific capacity of the all-solid-state battery system while ensuring relatively high initial coulombic efficiency and cycle performance.

Furthermore, from Examples 1 and 12, it can be seen that changing the composition of the halide solid electrolyte material of the coating layer may change the ionic conductivity of the coating layer, thereby affecting the initial coulombic efficiency, discharge specific capacity and cycle performance of the all-solid-state battery system.

Furthermore, from Examples 1 to 3, it can be seen that the acid concentration of the solution has obvious influence on the initial coulombic efficiency and discharge specific capacity of the battery.

Furthermore, from Examples 1, 5 and 6 and Comparative Examples 2 and 3, it can be seen that immersing the lithium-rich positive electrode material in the acidic precursor solution for too long time or using excessively high acid concentration may lead to a decrease in the discharge specific capacity of the positive electrode material.

Furthermore, from Examples 1 and 7, it can be seen that the excessive proportion of the coating layer is not beneficial to the specific capacity of the lithium-rich manganese-based positive electrode materials.

Finally, it should be noted the above examples are only used to illustrate the technical solutions of the present application, but not to limit them. Although the present application has been illustrated in detail with reference to the aforementioned examples, it should be understood by those skilled in the art that they may still make modifications to the technical solutions recorded in the aforementioned examples or make equivalent substitutions to some or all of technical features therein; however, these modifications or substitutions do not make the essence of the corresponding technical solutions depart from the scope of the technical solutions of various examples of the present application.

## Claims

1. A positive electrode material, comprising a lithium-rich manganese-based positive electrode active material and a coating layer covering at least part of a surface of the lithium-rich manganese-based positive electrode active material, wherein a molecular formula of the lithium-rich manganese-based positive electrode active material is $xLi_{2-\alpha}MnO_3\cdot(1-x)Li_{1-\beta}Ni_aCo_bMn_cO_{2-\gamma}$, and a + b + c = 1, $0 < \alpha + \beta \le 0.2$, $0 < \gamma \le 0.1$, and $0 < x < 1$;

the coating layer meets the following Formula 1 and Formula 2:

$$0.5 \times 10^{-3} \text{ S/cm} \le T \le 5 \times 10^{-3} \text{ S/cm} \qquad \text{Formula 1}$$

$$H \le 10^{-9} \text{ S/cm} \qquad \text{Formula 2}$$

wherein T is an ionic conductivity of the coating layer, and H is an electronic conductivity of the coating layer.

2. The positive electrode material according to claim 1, wherein the coating layer comprises a halide solid electrolyte material.

3. The positive electrode material according to claim 2, wherein a chemical composition of the halide solid electrolyte material is $Li_dMX_e$, wherein M is one or more of Ho, Y, Er and Yb, X is Cl or Br, $0 < d \le 10$, and $1 \le e \le 13$。

4. The positive electrode material according to claim 2 or 3, wherein a thickness of the coating layer is at nanoscale.

5. The positive electrode material according to claim 4, wherein the thickness of the coating layer is 5 to 80 nm.

6. The positive electrode material according to claim 2 or 3, wherein a mass ratio of the coating layer in the positive electrode material is 0.1% to 0.5%.

7. The positive electrode material according to any one of claims 1 to 6, wherein the coating layer is dense and free of pores, or contains micropores with a pore diameter of not exceeding 5 nm.

8. The positive electrode material according to any one of claims 1 to 7, wherein a specific surface area of the positive electrode material is 0.5 to 1.3 $m^2$/g;
and/or, a size of single crystal grains of the positive electrode material is 0.7 to 1.5 $\mu$m, and a particle diameter of the positive electrode material is 4 to 6 $\mu$m.

9. A preparation method of the positive electrode material according to any one of claims 1 to 8, comprising the following steps:

1) mixing an oxide of M, an ammonium salt, a lithium salt and an HX solution, and stirring at 20 to 90°C to obtain a mixed solution with a pH of 1 to 3; wherein M is one or more of Ho, Y, Er and Yb, and X is Cl or Br;
2) immersing a lithium-rich manganese-based material into the mixed solution, standing for 1 to 5 min, and drying to obtain a precursor; and
3) in a protective atmosphere, heating the precursor to 400 to 600°C at a heating rate of 1 to 10°C/min, and holding for 4 to 6 h to obtain the positive electrode material.

10. The preparation method according to claim 9, wherein a general formula of the lithium-rich manganese-based material is $xLi_2MnO_3\cdot(1-x)LiNi_aCo_bMn_cO_2$, wherein a + b + c = 1, $0 \le a \le 1$, $0 \le b \le 1$, $0 \le c \le 1$, and $0 < x < 1$.

11. The preparation method according to claim 10, wherein a solid-to-liquid ratio of the lithium-rich manganese-based material and the mixed solution is (50-100) g : (0.1-1) L.

12. A positive electrode sheet, comprising a positive electrode active layer and a current collector, wherein the positive electrode active layer comprises the positive electrode material according to any one of claims 1 to 8, a sulfide solid electrolyte, a conductive agent and a binder.

13. An all-solid-state battery, comprising the positive electrode sheet according to claim 12.

FIG. 1

FIG. 2

FIG. 3

FIG. 4

FIG. 5

## INTERNATIONAL SEARCH REPORT

International application No.

**PCT/CN2025/081034**

### A. CLASSIFICATION OF SUBJECT MATTER

H01M4/505(2010.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNTXT, WPABS, DWPI, ENTXT, ENTXTC, Elsevier Science Direct, ISI Web of Science, 读秀, DUXIU, 超星科技数字图书馆, Chaoxing Digital Library, 中国期刊网全文数据库, CJFD: 富锂锰基, 锂锰, 正极, 包覆, 包裹, 氧, 锂, 缺位, 空位, 缺陷, 卤素, 氯, 溴, Ho, Y, Er, Yb, 镧系, 钬, 铒, 钇, 镱, 酸, 氢溴酸, 盐酸, 库伦, 迁移, negative, electrode, lithium-rich manganese-based, halide, coat+, migration, efficiency

### C. DOCUMENTS CONSIDERED TO BE RELEVANT

| Category* | Citation of document, with indication, where appropriate, of the relevant passages | Relevant to claim No. |
|---|---|---|
| PX | CN 118156486 A (NINGBO RONBAY NEW ENERGY TECHNOLOGY CO., LTD.) 07 June 2024 (2024-06-07)<br>claims 1-10, and description, specific embodiments | 1-13 |
| PX | CN 118553911 A (TIANJIN B&M SCIENCE AND TECHNOLOGY CO., LTD.) 27 August 2024 (2024-08-27)<br>description, paragraphs 6-37 | 1-8, 12-13 |
| Y | CN 111129429 A (CHINA AUTOMOTIVE BATTERY RESEARCH INSTITUTE CO., LTD.) 08 May 2020 (2020-05-08)<br>description, paragraphs 8 and 18-19, and embodiment 2 | 1-8, 12-13 |
| Y | CN 117174893 A (HARBIN INSTITUTE OF TECHNOLOGY (SHENZHEN) (SHENZHEN INSTITUTE OF SCIENCE AND TECHNOLOGY INNOVATION, HARBIN INSTITUTE OF TECHNOLOGY)) 05 December 2023 (2023-12-05)<br>description, paragraph 22 | 1-8, 12-13 |

☑ Further documents are listed in the continuation of Box C.    ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **19 May 2025** | **23 May 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 723 223 A1

## INTERNATIONAL SEARCH REPORT

International application No.

**PCT/CN2025/081034**

### C. DOCUMENTS CONSIDERED TO BE RELEVANT

| Category* | Citation of document, with indication, where appropriate, of the relevant passages | Relevant to claim No. |
|---|---|---|
| Y | CN 104466157 A (NINGBO INSTITUTE OF MATERIALS TECHNOLOGY AND ENGINEERING, CHINESE ACADEMY OF SCIENCES) 25 March 2015 (2015-03-25) description, paragraph 29 | 1-8, 12-13 |
| A | CN 106784655 A (UNIVERSITY OF SCIENCE AND TECHNOLOGY BEIJING) 31 May 2017 (2017-05-31) entire description | 1-13 |
| A | CN 114784234 A (NINGBO INSTITUTE OF MATERIALS TECHNOLOGY AND ENGINEERING, CHINESE ACADEMY OF SCIENCES) 22 July 2022 (2022-07-22) entire description | 1-13 |
| A | CN 117637994 A (GEM CO., LTD.) 01 March 2024 (2024-03-01) entire description | 1-13 |
| A | WO 2020197197 A1 (LG CHEMICAL, LTD. et al.) 01 October 2020 (2020-10-01) entire description | 1-13 |

# EP 4 723 223 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 118156486 | A | 07 June 2024 | None | | | |
| CN | 118553911 | A | 27 August 2024 | None | | | |
| CN | 111129429 | A | 08 May 2020 | None | | | |
| CN | 117174893 | A | 05 December 2023 | None | | | |
| CN | 104466157 | A | 25 March 2015 | US | 2016226068 | A1 | 04 August 2016 |
| | | | | US | 10074856 | B2 | 11 September 2018 |
| | | | | KR | 20160055204 | A | 17 May 2016 |
| | | | | KR | 101826453 | B1 | 06 February 2018 |
| | | | | WO | 2015035712 | A1 | 19 March 2015 |
| | | | | CN | 104466157 | B | 12 April 2017 |
| CN | 106784655 | A | 31 May 2017 | CN | 106784655 | B | 15 February 2019 |
| CN | 114784234 | A | 22 July 2022 | CN | 114784234 | B | 31 October 2023 |
| CN | 117637994 | A | 01 March 2024 | None | | | |
| WO | 2020197197 | A1 | 01 October 2020 | EP | 3896761 | A1 | 20 October 2021 |
| | | | | JP | 2022518416 | A | 15 March 2022 |
| | | | | JP | 7297191 | B2 | 26 June 2023 |
| | | | | CN | 114072934 | A | 18 February 2022 |
| | | | | CN | 114072934 | B | 13 August 2024 |
| | | | | KR | 20200113122 | A | 06 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410257081